# EUROPEAN PATENT SPECIFICATION

(11) **EP 4 370 606 B1**
(45) Date of publication and mention of the grant of the patent: **28.01.2026**
(21) Application number: 21949611.4
(22) Date of filing: 14.07.2021
(51) Int. Cl.: C08K 3/22, C08K 5/5419, C08L 83/04, C09J 183/04

(54) **THERMAL CONDUCTIVE SILICONE COMPOSITION**
WÄRMELEITFÄHIGE SILIKONZUSAMMENSETZUNG
COMPOSITION DE SILICONE THERMOCONDUCTRICE

(43) Date of publication of application: 22.05.2024
(73) Proprietor: Dow Silicones Corporation, Midland, Michigan 48686 (US); Dow Global Technologies LLC, Midland, MI 48674 (US)
(72) Inventor: HUANG, Yan, Shanghai 201203 (CN); BHAGWAGAR, Dorab, Auburn, Michigan 48611 (US); WANG, LinFei, Shanghai 201203 (CN); CAO, ZhongWei, Shanghai 201203 (CN)
(74) Representative: Murgitroyd & Company
(86) International application number: PCT/CN2021/106191
(87) International publication number: WO 2023/283819

(56) References cited:
- WO-A1-2014/098204
- WO-A1-2021/016743
- CN-A- 101 627 077
- CN-A- 110 088 206
- US-A- 5 696 209
- US-A1- 2004 254 275
- US-A1- 2007 037 997
- US-A1- 2011 274 935
- US-A1- 2012 292 558

## Description

### Technical Field

The present invention relates to a thermal conductive silicone composition.

### Background Art

Thermal conductive silicone compositions, which can be cured by a hydrosilylation reaction, form thermal conductive materials having excellent heat resistance, chemical resistance, flexibility and the like, and are therefore used in a variety of applications, such as encapsulants or potting materials in electric/electronic devices where higher temperature may be needed.

For example, as such a hydrosilylation reaction-curable silicone composition, Patent Document 1 discloses a silicone composition comprising: an organopolysiloxane having at least two alkenyl groups per molecule, an organopolysiloxane having at least two silicon atom-bonded hydrogen atoms per molecule, a thermal conductive filler, an organosiloxane having silicon atom-bonded alkoxy group as a filler treating agent, and an adhesive promoter. According to Patent Document 1, this composition is excellent in handleability, even when it contains a large amount of a thermal conductive filler for the purpose of attaining higher heat conductivity. However, when this thermally conductive silicone being used as a potting-materials to pure aluminum substrate, it shows very poor adhesion strength to the Al substrate.

While, Patent Document 2 discloses 1-(alkoxysilyl)ethyl-1,1,3,3-tetramethyldisioloxane is useful as surface treating agents for inorganic powder, modifiers for silicone fluids or the like, starting materials for silicone sealants, silane coupling agents or the like. And Patent Document 3 discloses a silicone composition comprising: an organopolysiloxane having at least two alkenyl groups per molecule, a trialkoxysilyl groupcontaining siloxane having at least one silicon atom-bonded hydrogen atom and at least one trialkoxysilyl group per molecule, a chain or cyclic organopolysiloxane having at least two silicon atom-bonded hydrogen atoms per molecule, a chain organopolysiloxane having at least three silicon atom-bonded hydrogen atoms per molecule, a hydrosilylation reaction catalyst, a condensation reaction catalyst, and a adhesion promoter. Patent Document 3 also disclose that the silicone composition may further comprise a thermally conductive filler to impart thermal conductivity to a cured product, and that the condensation reaction catalyst is used in combination with the hydrosilylation reaction catalyst to improve a curability of the composition at from room temperature to 50° C., as well as adhesion properties to various substrates. However, when this thermally conductive silicone being used as a potting-materials to pure aluminum substrate, it also shows very poor adhesion strength to the Al substrate.

### Prior Art Documents

### Patent Documents

Patent Document 1: U.S. Patent Application Publication No. 2004/0254275 A1
Patent Document 2: U.S. Patent Application Publication No. 2007/0037997 A1
Patent Document 3: U.S. Patent Application Publication No. 2020/0347229 A1

### Summary of Invention

### Technical Problem

An object of the present invention is to provide a thermal conductive silicone composition exhibiting good self-adhesive properties to various substrates even when it is cured at a relatively low temperature, without impairing its flowability.

### Solution to Problem

The thermal conductive silicone composition of the present invention comprises:
(A) an organopolysiloxane having at least two silicon atom-bonded alkenyl groups per molecule and having a viscosity at 25 °C of from 10 to 10,000 mPa·s measured using a type B viscometer according to ASTM D 1084;
(B) an organopolysiloxane having at least two silicon atom-bonded hydrogen atoms per molecule, in an amount to provide 0.5 to 5 moles of silicon atom-bonded hydrogen atoms per 1 mole of alkenyl groups in component (A);
(C) an adhesion promoter represented by the following general formula:

   HR¹₂Si(OSiR¹₂)ₘ-X-SiR¹ₐ(OR²) ₍₃₋ₐ₎

   wherein each R¹ is independently an alkyl group having 1 to 6 carbon atoms, each R² is independently an alkyl group having 1 to 3 carbon atoms, X is an alkylene group having 2 to 6 carbon atoms, "a" is 0 or 1, and "m" is an integer of from 1 to 10, in an amount of from 0.05 to 2 mass% of the composition;
(D) at least one thermal conductive filler, in an amount of from 70 to 95 mass% of the composition;
(E) at least one filler treating agent, in an amount of from 0.1 to 2 mass% of the composition; and
(F) a catalytic amount of a hydrosilylation reaction catalyst,
with the proviso that the composition does not contain a condensation catalyst.

In various embodiments, component (C) is an adhesion promoter represented by the following formula:

H(CH₃)₂SiOSi(CH₃)₂-CH₂CH₂-Si(OCH₃)₃.

In various embodiments, component (D) is a thermal conductive filler having an average particle size of from 0.1 µm to 50 µm.

In various embodiments, component (E) is a filler treating agent selected from
(E1) an organosiloxane represented by the following general formula (1):

   R³₃SiO(SiR³₂O)ₙSiR³_{b}(OR⁴) _{(4-b)}

   wherein each R³ is independently an alkyl group with 1 to 3 carbon atoms or an alkenyl groups with 2 to 6 carbon atoms, each R⁴ is independently an alkyl group with 1 to 3 carbon atoms, "b" is 0 or 1, and "n" is an integer of 5 to 150;
(E2) an alkoxysilane represented by the following general formula (2):

   R⁵_{c}R⁶_{d}Si(OR⁷) _{(4-c-d)}

   wherein each R⁵ is independently an alkyl group with 1 to 3 carbon atoms, each R⁶ is independently an alkyl group with 6 to 12 carbon atoms, each R⁷ is independently an alkyl group with 1 to 3 carbon atoms; and "c" is 0 or 1, "d" is 0 or 1, provided that "c+d" is 1 or 2; and a mixture of components (E1) and (E2).

In various embodiments, the thermal conductive silicone composition further comprises: (G) retardant, in an amount of 0.001 to 5 parts by mass per 100 parts by mass of component (A).

In various embodiments, the thermal conductive silicone composition is a two-part composition, wherein component (A), component (B), and component (F) do not exist within the same part; and component (A), component (C), and component (F) do not exist within the same part.

In various embodiments, when the thermal conductive silicone composition further comprises component (G), the composition is a two-part composition, wherein component (A), component (B), and component (F) do not exist within the same part; component (A), component (C), and component (F) do not exist within the same part; and component (G) exists in a different part from that of component (F).

### Effects of Invention

The thermal conductive silicone composition of the present invention exhibits good self-adhesive properties to various substrates even when it is cured at a relatively low temperature, without impairing its flowability.

### Definitions

The terms "comprising" or "comprise" are used herein in their broadest sense to mean and encompass the notions of "including," "include," "consist(ing) essentially of," and "consist(ing) of." The use of "for example," "e.g.," "such as," and "including" to list illustrative examples does not limit to only the listed examples. Thus, "for example" or "such as" means "for example, but not limited to" or "such as, but not limited to" and encompasses other similar or equivalent examples. The term "about" as used herein serves to reasonably encompass or describe minor variations in numerical values measured by instrumental analysis or as a result of sample handling. Such minor variations may be in the order of ±0-25, ±0-10, ±0-5, or ±0-2.5, % of the numerical values. Further, the term "about" applies to both numerical values when associated with a range of values. Moreover, the term "about" may apply to numerical values even when not explicitly stated.

It is to be understood that the appended claims are not limited to express and particular compounds, compositions, or methods described in the detailed description, which may vary between particular embodiments which fall within the scope of the appended claims. With respect to any Markush groups relied upon herein for describing particular features or aspects of various embodiments, it is to be appreciated that different, special, and/or unexpected results may be obtained from each member of the respective Markush group independent from all other Markush members. Each member of a Markush group may be relied upon individually and or in combination and provides adequate support for specific embodiments within the scope of the appended claims.

It is also to be understood that any ranges and subranges relied upon in describing various embodiments of the present invention independently and collectively fall within the scope of the appended claims, and are understood to describe and contemplate all ranges including whole and/or fractional values therein, even if such values are not expressly written herein. One of skill in the art readily recognizes that the enumerated ranges and subranges sufficiently describe and enable various embodiments of the present invention, and such ranges and subranges may be further delineated into relevant halves, thirds, quarters, fifths, and so on. As just one example, a range "of from 0.1 to 0.9" may be further delineated into a lower third, i.e., from 0.1 to 0.3, a middle third, i.e., from 0.4 to 0.6, and an upper third, i.e., from 0.7 to 0.9, which individually and collectively are within the scope of the appended claims, and may be relied upon individually and/or collectively and provide adequate support for specific embodiments within the scope of the appended claims. In addition, with respect to the language which defines or modifies a range, such as "at least," "greater than," "less than," "no more than," and the like, it is to be understood that such language includes subranges and/or an upper or lower limit. As another example, a range of "at least 10" inherently includes a subrange of from at least 10 to 35, a subrange of from at least 10 to 25, a subrange of from 25 to 35, and so on, and each subrange may be relied upon individually and/or collectively and provides adequate support for specific embodiments within the scope of the appended claims. Finally, an individual number within a disclosed range may be relied upon and provides adequate support for specific embodiments within the scope of the appended claims. For example, a range "of from 1 to 9" includes various individual integers, such as 3, as well as individual numbers including a decimal point (or fraction), such as 4.1, which may be relied upon and provide adequate support for specific embodiments within the scope of the appended claims.

### Detailed Description of the Invention

Component (A) is a primary component in the present composition and is an organopolysiloxane having at least two silicon atom-bonded alkenyl groups per molecule. Examples of the alkenyl groups include alkenyl groups having from 2 to 12 carbon atoms such as vinyl groups, allyl groups, butenyl groups, pentenyl groups, hexenyl groups, heptenyl groups, octenyl groups, nonenyl groups, decenyl groups, undecenyl groups, and dodecenyl groups, among which vinyl groups are preferable. In addition, examples of groups bonding to silicon atoms other than the alkenyl groups in component (A) include alkyl groups having from 1 to 12 carbon atoms such as methyl groups, ethyl groups, propyl groups, isopropyl groups, butyl groups, isobutyl groups, tert-butyl groups, pentyl groups, neopentyl groups, hexyl groups, cyclohexyl groups, heptyl groups, octyl groups, nonyl groups, decyl groups, undecyl groups, and dodecyl groups; aryl groups having from 6 to 12 carbon atoms such as phenyl groups, tolyl groups, xylyl groups, and naphthyl groups; aralkyl groups having from 7 to 12 carbon atoms such as benzyl groups, phenethyl groups, and phenylpropyl groups; and groups in which some or all of the hydrogen atoms of these groups are substituted with halogen atoms such as fluorine atoms, chlorine atoms, or bromine atoms. Furthermore, the silicon atoms in component (A) may have small amounts of hydroxyl groups or alkoxy groups such as methoxy groups or ethoxy groups within a range that does not impair the object of the present invention.

Examples of molecular structure of component (A) include a straight-chain structure, a partially branched straight-chain structure, a branched-chain structure, a cyclic structure, and a three-dimensional reticular structure. Component (A) may be one type of organopolysiloxane having these molecular structures or may be a mixture of two or more types of organopolysiloxanes having these molecular structures.

Examples of component (A) include a dimethylpolysiloxane capped at both molecular terminals with dimethylvinylsiloxy groups, a copolymer of dimethylsiloxane and methylvinylsiloxane capped at both molecular terminals with trimethylsiloxy groups, a copolymer of dimethylsiloxane and methylvinylsiloxane capped at both molecular terminals with dimethylvinylsiloxy groups, a copolymer of dimethylsiloxane, methylphenylsiloxane and methylvinylsiloxane capped at both molecular terminals with trimethylsiloxy groups, a copolymer of dimethylsiloxane and methylvinylsiloxane capped at both molecular terminals with silanol groups, an organopolysiloxane consisting of a siloxane unit represented by the formula: (CH₃)₃SiO_{1/2}, a siloxane unit represented by the formula: (CH₃)₂(CH₂=CH)SiO_{1/2}, a siloxane unit represented by the formula CH₃SiO_{3/2}, and a siloxane unit represented by the formula: (CH₃)₂SiO_{2/2}; and combinations of two or more thereof.

Additionally, a viscosity at 25 °C of component (A) is in a range of from 10 to 10,000 mPa·s, preferably in a range from 10 to 5,000 mPa·s, alternatively in a range from 10 to 3,000 mPa·s, or alternatively in a range from 50 to 2,000 mPa·s. This is because when the viscosity of component (A) is greater than or equal to the lower limit of the aforementioned range, mechanical properties of a thermal conductive material obtained by curing the silicone composition is improved, and when the viscosity of component (A) is less than or equal to the upper limit of the aforementioned range, handling of the present composition is improved. Note that in the present specification, viscosity at 25 °C is the value measured using a type B viscometer according to ASTM D 1084.

Component (B) is a crosslinking agent for component (A) in the present composition and is an organopolysiloxane having at least two silicon atom-bonded hydrogen atoms per molecule. Examples of groups bonding to silicon atoms other than hydrogen groups in component (B) include alkyl groups having from 1 to 12 carbon atoms such as methyl groups, ethyl groups, propyl groups, isopropyl groups, butyl groups, isobutyl groups, tert-butyl groups, pentyl groups, neopentyl groups, hexyl groups, cyclohexyl groups, heptyl groups, octyl groups, nonyl groups, decyl groups, undecyl groups, and dodecyl groups; aryl groups having from 6 to 20 carbon atoms such as phenyl groups, tolyl groups, xylyl groups, and naphthyl groups; aralkyl groups having from 7 to 20 carbon atoms such as benzyl groups, phenethyl groups, and phenylpropyl groups; and groups in which some or all of the hydrogen atoms of these groups are substituted with halogen atoms such as fluorine atoms, chlorine atoms, or bromine atoms. Furthermore, the silicon atoms in component (B) may have small amounts of hydroxyl groups or alkoxy groups such as methoxy groups or ethoxy groups within a range that does not impair the object of the present invention.

Examples of the molecular structure of component (B) include straight-chain, partially branched straight-chain, branched chain, cyclic, and three-dimensional reticular structures, and the molecular structure is preferably a straight-chain, partially branched straight-chain, branched chain, or three-dimensional reticular structure.

Examples of such component (B) include a methylhydrogenpolysiloxane capped at both molecular terminals with trimethylsiloxy groups, a copolymer of dimethylsiloxane and methylhydrogensiloxane capped at both molecular terminals with trimethylsiloxy groups, a dimethylpolysiloxane capped at both molecular terminals with dimethylhydrogensiloxy groups, a copolymer of dimethylsiloxane and methylhydrogensiloxane capped at both molecular terminals with dimethylhydrogensiloxy groups, a copolymer of methylhydrogensiloxane and diphenylsiloxane capped at both molecular terminals with trimethylsiloxy groups, a copolymer of methylhydrogensiloxane, diphenylsiloxane and dimethylsiloxane capped at both molecular terminals with trimethylsiloxy groups, a copolymer consisting of (CH₃)₂HSiO_{1/2} units and SiO_{4/2} units, copolymers consisting of (CH₃)₂HSiO_{1/2} units, SiO_{4/2} units, and (C₆H₅)SiO_{3/2} units, and mixtures of two or more types thereof.

A content of component (B) is in an amount to provide 0.5 to 5 moles, preferably 0.5 to 3 moles, alternatively 0.5 to 2 moles of silicon atom-bonded hydrogen atoms per 1 mole of alkenyl groups in component (A). This is because, when the content of component (B) is equal to or greater than the lower limit of the range described above, the resulting composition is cured sufficiently. On the other hand, when the content of component (B) is equal to or less than the upper limit of the range described above, heat resistance of the resulting thermal conductive material is enhanced.

Component (C) is an adhesion promoter for the present composition and is represented by the following general formula:

HR¹₂Si(OSiR¹₂)ₘ-X-SiR¹ₐ(OR²) ₍₃₋ₐ₎

.

In the formula above, each R¹ is independently an alkyl group having 1 to 6 carbon atoms. Examples of alkyl groups for R¹ include methyl groups, ethyl groups, propyl groups, isopropyl groups, butyl groups, isobutyl groups, tert-butyl groups, pentyl groups, neopentyl groups, and hexyl groups, among which methyl groups are preferable.

In the formula above, each R² is independently an alkyl group having 1 to 3 carbon atoms. Examples of alkyl groups for R² include methyl groups, ethyl groups, and propyl groups, among which methyl groups are preferable.

In the formula above, X is an alkylene group having 2 to 6 carbon atoms. Examples of alkylene groups for X include ethylene groups, propylene groups, butylene groups, pentylene groups, and hexylene groups, among which ethylene groups are preferable.

In the formula above, "a" is 0 or 1, preferably 0.

In the formula above, "m" is an integer of from 1 to 10, preferably an integer of from 1 to 5, alternatively an integer of from 1 to 3, or alternatively 1 or 2.

Since component (C) has a silicon atom-bonded hydrogen atom and at least one silicon atom-bonded alkoxy group, it may react with component (A) and interact with various substrates simultaneously. Examples of component (C) include adhesion promoters represented by the following formulae:

H(CH₃)₂SiOSi(CH₃)₂-CH₂CH₂-Si(OCH₃)₃

H(CH₃)₂SiOSi(CH₃)₂-CH₂CH₂CH₂-Si(OCH₃)₃

H(CH₃)₂SiOSi(CH₃)₂-CH₂CH₂-SiCH₃(OCH₃)₂

H(CH₃)₂Si[OSi(CH₃)₂]₅-CH₂CH₂-Si(OCH₃)₃

Among them, an adhesion promoter represent by the following formula is preferable.

H(CH₃)₂SiOSi(CH₃)₂-CH₂CH₂-Si(OCH₃)₃.

A content of component (C) is in a range of from 0.05 to 2 mass%, preferably in a range of from 0.05 to 1 mass%, or alternatively in a range of from 0.1 to 1 mass%, of the present composition. This is because when the content of component (C) is equal to or greater than the lower limit of the range described above, self-adhesion property of the present composition is good, whereas when the content of component (C) is equal to or less than the upper limit of the range described above, storage stability of the present composition is good.

Component (D) is at least one thermal conductive filler. For instance, component (D) can be any one or any combination of more than one thermal conductive filler selected from metals, alloys, nonmetals, metal oxides, metal hydrates or ceramics. Exemplary metals include but are not limited to aluminum, copper, silver, zinc, nickel, tin, indium, and lead. Exemplary nonmetals include but are not limited to carbon, graphite, diamond, carbon nanotubes, carbon fibers, graphene, silicon carbide and silicon nitride. Exemplary metal oxides, metal hydroxides and ceramics include but are not limited to alumina, aluminum hydroxide, aluminum nitride, boron nitride, zinc oxide, beryllium oxide, magnesium oxide and tin oxide. Desirably, component (D) is any one or any combination of more than one selected from a group consisting of alumina, aluminum, zinc oxide, boron nitride, aluminum nitride, and aluminum oxide trihydrate.

Component (D) is preferably a thermal conductive filler having an average particle size of from 0.1 µm to 50 µm. Even more desirably, component (D) is any one or any combination or more than one filler selected from aluminum oxide particles having an average size of less than 5 µm, aluminum oxide particles having an average particle size of 5 µm or more, aluminum hydroxide particles having an average size of less than 5 µm, aluminum hydroxide particles having an average particle size of 5 µm or more. Determine average particle size for filler particles as the median particle size (D50) using laser diffraction particle size analyzers (CILAS920 Particle Size Analyzer or Beckman Coulter LS 13 320 SW) according to an operation software.

A content of component (D) is in a range of from 70 to 95 mass%, alternatively in a range of from 75 to 95 mass%, or alternatively in a range of from 80 to 95 mass%, of the present composition. This is because when the content of component (D) is equal to or less than the upper limit of the range described above, thermal conductive properties of the cured product are good.

Component (E) is at least one filler treating agent to assist dispersing of component (D) in component (A). Component (E) is not limited, but it is preferably a filler treating agent selected from
(E1) an organosiloxane represented by the following general formula (1):

   R³₃SiO(SiR³₂O)ₙSiR³_{b}(OR⁴) _{(4-b)}
(E2) an alkoxysilane represented by the following general formula (2):

   R⁵_{c}R⁶_{d}Si(OR⁷) _{(4-c-d)}
and a mixture of components (E1) and (E2).

In the formula (1), each R³ is independently an alkyl group with 1 to 3 carbon atoms or an alkenyl groups with 2 to 6 carbon atoms. Examples of alkyl groups for R³ include methyl groups, ethyl groups, and propyl groups, among which methyl groups are preferable. Examples of alkenyl groups for R³ include vinyl groups, allyl groups, butenyl groups, pentenyl groups, and hexenyl groups, among which vinyl groups are preferable.

In the formula (1), each R⁴ is independently an alkyl group with 1 to 3 carbon atoms. Examples of alkyl groups for R⁴ include methyl groups, ethyl groups, and propyl groups, among which methyl groups are preferable.

In the formula (1), "b" is 0 or 1, and preferably 0.

In the formula (1), "n" is an integer of 5 to 150, preferably an integer of 10 to 120, alternatively an integer of 50 to 120 when all R³ are alkyl groups, or alternatively an integer of 10 to 50 when at least one R³ is an alkenyl group.

Examples of component (E1) include organosiloxanes represented by the following formulae:

(CH₃)₃SiO[Si(CH₃)₂O]₂₀Si(OCH₃)₃

(CH₃)₃SiO[Si(CH₃)₂O]₅₀Si(OCH₃)₃

(CH₃)₃SiO[Si(CH₃)₂O]₁₁₀Si(OCH₃)₃

(CH₂=CH)(CH₃)₂SiO[Si(CH₃)₂O]₁₀Si(OCH₃)₃

(CH₂=CH)(CH₃)₂SiO[Si(CH₃)₂O]₂₀Si(OCH₃)₃

In the formula (2), each R⁵ is independently an alkyl group with 1 to 3 carbon atoms. Examples of alkyl groups for R⁵ include methyl groups, ethyl groups, and propyl groups, among which methyl groups are preferable.

In the formula (2), each R⁶ is independently an alkyl group with 6 to 12 carbon atoms. Examples of alkyl groups for R⁶ include hexyl groups, cyclohexyl groups, heptyl groups, octyl groups, nonyl groups, decyl groups, undecyl groups, and dodecyl groups, among which octyl groups and decyl groups are preferable.

In the formula (2), each R⁷ is independently an alkyl group with 1 to 3 carbon atoms. Examples of alkyl groups for R⁷ include methyl groups, ethyl groups, and propyl groups, among which methyl groups are preferable.

In the formula (2), "c" is 0 or 1, "d" is 0 or 1, provided that "c+d" is 1 or 2.

Examples of alkoxysilanes for component (E2) include methyl trimethoxysilane, hexyl trimethoxysilane, heptyl trimethoxysilane, octyl triethoxysilane, decyl trimethoxysilane, dodecyl trimethoxysilane, dodecyl methyl dimethoxysilane, dodecyl triethoxysilane, tetradecyl trimethoxysilane, octadecyl trimethoxysilane, octadecyl methyl dimethoxysilane, octadecyl triethoxysilane, nonadecyl trimethoxysilane, or any combination of at least two thereof.

A content of component (E) is in a range of from 0.1 to 2 mass%, preferably in a range of from 0.1 to 1 mass%, or alternatively in a range of from 0.5 to 1 mass%, of the present composition. This is because when the content of component (E) is equal to or greater than the lower limit of the range described above, component (D) is sufficiently surface-treated to be load into the present composition, whereas when the content of component (E) is equal to or less than the upper limit of the range described above, storage stability of the present composition is good.

Component (F) is a hydrosilylation catalyst to accelerate curing of the present composition. Examples of component (F) include platinum group element catalysts and platinum group element compound catalysts, and specific examples include platinum-based catalysts, rhodium-based catalysts, palladium-based catalysts, and combinations of at least two types thereof. In particular, platinum-based catalysts are preferable in that the curing of the present composition can be dramatically accelerated. Examples of these platinum-based catalysts include finely powdered platinum; platinum black; chloroplatinic acid, alcohol-modified chloroplatinic acid; chloroplatinic acid/diolefin complexes; platinum/olefin complexes; platinum/carbonyl complexes such as platinum bis(acetoacetate), and platinum bis(acetylacetonate); chloroplatinic acid/alkenylsiloxane complexes such as chloroplatinic acid/divinyltetramethyl disiloxane complexes, and chloroplatinic acid/tetravinyl tetramethyl cyclotetrasiloxane complexes; platinum/alkenyisiloxane complexes such as platinum/divinyltetramethyl disiloxane complexes, and platinum/tetravinyl tetramethyl cyclotetrasiloxane complexes; complexes of chloroplatinic acid and acetylene alcohols; and mixtures of two or more types thereof. In particular, platinum-alkenylsiloxane complexes are preferable in that the curing of the present composition can be accelerated.

Examples of the alkenylsiloxane used in the platinum-alkenylsiloxane complex include 1,3-divinyl-1,1,3,3-tetramethyldisiloxane, 1,3,5,7-tetramethyl-1,3,5,7-tetravinylcyclotetrasiloxane, alkenylsiloxane oligomers in which some of methyl groups of these alkenylsiloxanes are substituted with ethyl groups, phenyl groups, or the like, and alkenylsiloxane oligomers in which vinyl groups of these alkenylisiloxanss are substituted with allyl groups, hexenyl groups, or the like. In particular, 1,3-divinyl-1,1,3,3-tetramethyldisiloxane is preferable in that the stability of the platinum-alkenylsiloxane complex that is produced is good.

In order to improve the stability of the platinum-alkenylsiloxane complexes, it is preferable to dissolve these platinum-alkenylsiloxane complexes in an alkenylsiloxane oligomer such as 1,3-divinyl-1,1,3,3-tetramethyldisiloxarie, 1,3-diallyl-1,1,3,3-tetramethyldisiloxane, 1,3-divinyl-1,3-dimethyl-1,3-diphenyldisiloxane, 1,3-divinyl-1,1,3,3-tetraphenyldisiloxane, or 1,3,5,7-tetramethyl-1,3,5,7-tetravinylcyclotetrasiloxane or an organosiloxane oligomer such as a dimethylsiloxane oligomer, and it is particularly preferable to dissolve the complexes in an alkenylsiloxane oligomer.

A content of component (F) is catalytic amount to accelerate the curing of the present composition, but it is preferably in an amount of from about 0.01 to about 1,000 ppm of the platinum group metal in this component in terms of mass units with respect to this composition. Specifically, the content is preferably an amount such that the content of platinum group metal in component (F) is in the range of from about 0.01 to about 500 ppm, alternatively in the range of from about 0.1 to about 100 ppm in terms of mass units with respect to the present composition. This is because when the content of component (E) is equal to or greater than the lower limit of the range described above, curability of the composition is good, whereas when the content of component (F) is equal to or less than the upper limit of the range described above, coloration of the thermal conductive material is suppressed, cost of the present composition is lowered and cure rate of the present composition can be controlled.

The present composition may comprise (G) a retardant in order to prolong the usable time at ambient temperature and to improve storage stability. Examples of component (G) include acetylenic alcohols such as 1-ethynyl-cyclohexan-1-ol, 2-methyl-3-butyn-2-ol, 2-phenyl-3-butyn-2-ol, 2-ethynyl-isopropan-2-ol, 2-ethynyl-butan-2-ol, and 3,5-dimethyl-1-hexyn-3-ol; silylated acetylenic alcohols such as trimethyl (3,5-dimethyl-1-hexyn-3-oxy) silane, dimethyl bis(3-methyl-1-butyn-oxy) silane, methylvinyl bis(3-methyl-1-butyn-3-oxy) silane, and ((1,1-dimethyl-2-propynyl)oxy)trimethylsilane; unsaturated carboxylic esters such as diallyl maleate, dimethyl maleate, diethyl fumarate, diallyl fumarate, and bis(2-methoxy-1-methylethyl) maleate, mono-octylmaleate, mono-isooctylmaleate, mono-allyl maleate, mono-methyl maleate, monoethyl fumarate, mono-allyl fumarate, and 2-methoxy-1-methylethylmaleate; ene-yne compounds such as 2-isobutyl-1-buten-3-yne, 3,5-dimethyl-3-hexen-1-yne, 3-methyl-3-penten-1-yne, 3-methyl-3-hexen-1-yne, 1-ethynyl cyclohexene, 3-ethyl-3-buten-1-yne, and 3-phenyl-3-buten-1-yne; and mixtures of two or more types thereof.

A content of component (G) is in an amount of from about 0.001 to 5 parts by mass, optionally in an amount of from about 0.001 to about 2 parts by mass, or optionally in an amount of from about 0.001 to about 1 part(s) by mass, per 100 parts by mass of component (A). This is because when the content of component (G) is equal to or greater than the lower limit of the range described above, handing of the present composition is good, whereas when the content of component (G) is equal to or less than the upper limit of the range described above, curability of the present composition at low temperatures is good.

The present composition may further comprise (H) a pigment that has an effect of preserving the desired physical characteristic of the thermally conductive silicone materials, namely the appropriate softness and compliant nature. Examples of component (H) include iron oxide red, titanium white, carbon black, and phthalocyanine compound. Among these, the phthalocyanine compound is preferably. Examples of the phthalocyanine compounds include copper phthalocyanine, and chlorinated copper phthalocyanine. Phthalocyanine compounds are available commercially, such as Stan-tone.TM. 40SP03 from PolyOne Corporation, Avon Lake, Ohio, USA.

A content of component (H) is not limited, but it is preferably in an amount such that in terms of mass units the pigment is in a range of 0.01 to 5 parts by mass, alternatively in a range of 0.05 to 5 parts by mass, or alternatively in a range of 0.05 to 1 parts by mass, per 100 parts by mass of component (A).

The present composition may comprise a reinforcing and/or non-reinforcing filler. Examples of the fillers include one or more of finely divided treated or untreated precipitated or fumed silica; precipitated or ground calcium carbonate, zinc carbonate; clays such as finely divided kaolin; quartz powder; zirconium silicate; diatomaceous earth; wollastonite; pyrophylate; and metal oxides such as fumed or precipitated titanium dioxide, cerium oxide, magnesium oxide powder, zinc oxide, and iron oxide. These may also include glass fiber; talc; aluminite; calcium sulphate (anhydrite); gypsum; calcium sulphate; magnesium carbonate; magnesium hydroxide (brucite); graphite; barite, a form of barium sulphate; copper carbonate, e.g., malachite; nickel carbonate, e.g., zarachite; barium carbonate, e.g., witherite; strontium carbonate e.g., strontianite, or a similar inorganic filler.

To prevent component (D) setting in the present composition, the present composition may comprise a reactive polymer, e.g., an organopolysiloxane having at least one silicon atom-bonded alkoxy group per molecule, providing that the organopolysiloxane has neither alkenyl group nor silicon atom-bonded hydrogen atom. Examples of the reactive polymers include a dimethylpolysiloxane capped at both molecular terminals with trimethoxysiloxy groups, a dimethylpolysiloxane capped at both molecular terminals with dimethoxymethlysiloxy groups, a dimethylpolysiloxane capped at both molecular terminals with trimethoxysilylethyl groups, and a dimethylpolysiloxane capped at both molecular terminals with triethoxysiloxy groups.

The present compositions can be prepared by combining all of ingredients at ambient temperature. However, the present composition does not contain a condensation catalyst to avoid impairing its flowability. Note that in the present specification, the condensation catalyst is used for a catalyst to promote a condensation reaction. Exemplary condensation catalysts may include tin compounds such as dimethyltin dineodecanoate and stannous octoate; titanium compounds such as tetra(isopropoxy)titanium, tetra(n-butoxy)titanium, tetra(t-butoxy)titanium, di(isopropoxy)bis(ethylacetoacetate)titanium, di(isopropoxy)bis(methylacetoacetate)titanium, titaniumtetraacetylacetonate, and di(isopropoxy)bis(acetylacetonate)titanium; aluminum compounds such as aluminum trisacetylacetonate, aluminum trisacetriacetate, and tris(sec-butoxy)aluminum; nickel compounds such as nickel bisacetylacetonate; cobalt compounds such as cobalt trisacetylacetonate; zinc compounds such as zinc bisacetylacetonate; and zirconium compounds such as zirconium tetra-n-propoxide, zirconium tetra-n-butoxide, zirconium tetraacetylacetonate, zirconium tributoxymonoacetylacetonate, zirconium monobutoxyacetylacetonate, zirconium dibutoxybis(ethylacetoacetate), zirconium tetraacetylacetonate, and zirconium tributoxymono stearate.

The present composition is preferably a two-part composition during its storage to avoid undesirably reacting. That is, in the two-part composition, component (A), component (B), and component (F) do not exist within the same part; and component (A), component (C), and component (F) do not exist within the same part. When the present composition further comprises component (G), component (A), component (B), and component (F) do not exist within the same part; component (A), component (C), and component (F) do not exist within the same part; and component (G) exists in a different part from that of component (F).

To distinguish the two parts from each other, either part may comprise pigments such as carbon black, and the like; and dyes.

When producing a thermal conductive cured silicone, the two parts described above are combined and mixed together in a mixing device to prepare a single, uniform composition, and this composition is then applied to a suitable substrate and cured in accordance with the intended application. Any of the mixing techniques and devices described in the prior art can be used for this purpose. The particular device used will be determined by the viscosity of the ingredients and the final composition. Cooling of the ingredients during mixing may be desirable to avoid premature curing.

There are no particular restrictions on the curing conditions for the present composition, which will vary depending on the makeup and the quantity of the present composition. The present composition can be cured at either room temperature, or if required, by heating. If heating is used, then the curing temperature is typically a relatively low temperature, e.g., within a range of from 50 to 120 °C, and preferably with in a range of from 60 to 100 "C. The relative proportions of each of the two parts that must be mixed together can be adjusted by varying the quantity of component (A) within each part, and typically a mass ratio of 1:1 provides superior workability.

The present composition can be used for encapsulants or potting materials in an electric/electronic device by a method comprising the steps of:
mixing the two-part stated above together to prepare a single, uniform composition,
applying the composition to an electric/electronic device and
curing said composition on the electric/electronic device.

For encapsulating or potting application, the present composition has to be very flowable to be able to completely flow over the fine features of the electronic device. For improved flowability, the viscosity of the present composition should be lower than 15,000 mPa·s and the thixotropic ratio should be less than 2.0. The flowability of the present composition as measured by Incline Plane Method described later should be more than 10mm. To efficiently remove the heat generated from the electronic device, the thermal conductivity of the potting material should be more than 0.7 W/mK. The potting material should also have good adhesion to the metal housing of the device. The lap shear strength after low and elevated temperature cure should be more than 45psi and failure mode should be non-adhesive (cohesive) failure.

### Examples

The thermal conductive silicone composition of the present invention will be described in detail hereinafter using Examples and Comparative Examples.

### <Lap Shear Strength (1)>

The lap shear strength test (1) was conducted according to ASTM D1002. Al Q-panel was employed as substrate. 2 pieces of Al panels were glued firmly using the thermal conductive silicone composition. After complete curing of the thermal conductive silicone composition under 70 °C for 0.5 hrs., the fixture was loaded and the joint was strained at a constant rate of 5 mm/min using the pull-off testing equipment, until a plug of the cured product was detached from the substrate surface. For each test, five replicate samples were employed, and the average value quoted.

### <Lap Shear Strength (2)>

The lap shear strength test (2) was conducted in the same manner as the lap shear strength test (1) described above, providing that the thermal conductive silicone composition was cured under 120 °C for 0.5 hrs.

### <Flowability>

The flowability test can be done by using Inclined Plane method. A rigid Teflon^{™} plate is held at a slope of 30°. 1 mL of composition was placed on the top of the inclined plane and the distance of flow after 5 minutes is reported in mm of flow. The longer the flow distance, the better the flowability of the sample.

### <Viscosity>

Viscosity at 25 °C was measured by using a type B viscometer (Brookfield HA Type Rotational Viscometer) at 1 s⁻¹ and 10 s⁻¹ according to ASTM D 1084 "Standard Test Methods for Viscosity of Adhesive".

### <Thixotropic index>

Thixotropic index was calculated as a ratio of the viscosity at 25 °C measured at 1 s⁻¹ with respect to the viscosity at 25 °C measured at 10 s⁻¹.

### <Thermal conductivity>

Thermal conductivity (W/m·K) was measured by Hot Disk thermal constant analyzer (Hot Disk TPS 25008).

### [Examples 1-7 and Comparative Examples 1-10]

Two-part thermal conductive silicone compositions consisting of Part A and Part B compositions shown in Tables 1-5 were prepared using the components mentioned below. Equal quantities of Part A and Part B compositions were mixed uniformly to produce a thermal conductive silicone composition. Moreover, in each Table, "SiH/Vi molar ratio" represents moles of silicon atom-bonded hydrogen atoms in component (B) per 1 mole of vinyl groups in components (A) in the thermal conductive silicone composition.

The following components were used as component (A).
V-P1: a dimethylpolysiloxane having a viscosity of about 78 mPa·s, a vinyl group-content of 1.25 mass%, and endblocked at both molecular chain terminals with dimethylvinylsiloxy groups.
V-P2: a dimethylpolysiloxane having a viscosity of about 2,000 mPa·s, a vinyl group-content of 0.24 mass%, and endblocked at both molecular chain terminals with dimethylvinylsiloxy groups.

The following components were used as component (B).
XL1: a copolymer of dimethylsiloxane and methylhydrogensiloxane having a viscosity of about 19 mPa·s, a silicon atom-bonded hydrogen atom-content of 0.114 mol%, and endblocked at both molecular chain terminals with trimethylsiloxy groups.
XL2: a copolymer of dimethylsiloxane and methylhydrogensiloxane having a viscosity of about 14 mPa·s, a silicon atom-bonded hydrogen atom-content of 0.36 mol%, and endblocked at both molecular chain terminals with trimethylsiloxy groups.
XL3: a dimethylpolysiloxane having a silicon atom-bonded hydrogen atom-content of 0.147 mol%, and endblocked at both molecular chain terminals with dimethylhydrogensiloxy groups.
XL4: a copolymer of dimethylsiloxane and methylhydrogensiloxane having a silicon atom-bonded hydrogen atom-content of 0.776 mol%, and endblocked at both molecular chain terminals with trimethylsiloxy groups.

The following component was used as component (C).
AP1: 1-(2-(trimethoxysilyl)-ethyl)-1,1,3,3-tetramethyl disiloxane represented by the following formula:

H(CH₃)₂SiOSi(CH₃)₂-C₂H₄-Si(OCH₃)₃

The following components were used as adhesion promotors for comparison of component (C)
AP2: 3-glycidoxypropyl trimethoxysilane
AP3: 3-methacryloxypropyl trimethoxysilane

The following components were used as component (D).
Filler-1: an alumina powder having an average particle diameter of about 9 µm (Product name A-CF-6 from ZhengZhou Light Metals Research Institute of CHIALCO)
Filler-2: an alumina powder having an average particle diameter of about 2 µm (Product name A-CF-2 from ZhengZhou Light Metals Research Institute of CHIALCO)
Filler-3: an alumina powder having an average particle diameter of about 4 µm (Product name Y-4 from Ginet)
Filler-4: an aluminum hydroxide powder having an average particle diameter of about 60 µm (Product name AH33-4 from CHIALCO)
Filler-5: an alumina powder having an average particle diameter of about 40 µm Product name DAM40K from DENKA Co., Ltd.)

The following components were used as component (E).
TA1: a dimethylpolysiloxane represented by the following average formula:

   (CH₃)₃SiO[(CH₃)₂SiO]₁₁₀Si(OCH₃)₃
TA2: n-decyl trimethoxysilane
TA3: methyl trimethoxysilane

The following component was used as component (F).
PT1: a platinum complex with 1,3-divinyl-1,1,3,3-tetramethyldisiloxane (platinum content = 0.4 mass%)

The following component was used as component (G).
Retardant: methyl-tris(1,1-dimethyl-2-propynyloxy) silane

The following component was used as a pigment.
Pigment: a pigment master batch of 50 mass% of carbon black and 50 mass% of a dimethylpolysiloxane having a viscosity of about 2,000 mPa·s, a vinyl group-content of 0.24 mass%, and endblocked at both molecular chain terminals with dimethylvinylsiloxy groups

The following component was used as a reactive polymer.
TM-PS1: a dimethylpolysiloxane having a viscosity of about 5,000 mPa·s and endblocked at both molecular chain terminals with trimethoxysiloxy groups

The following component was used as a condensation catalyst.
Ti 1: diisopropoxytitanium bis(ethylacetoacetate)

### <Part A Compositions>

Each part A composition shown in Tables 1-5 was produced by the following steps:
(i) Loading a part of component (A) and component (E) into a container of a 10-Liter Turello mixer.
(ii) Mixing for 5 minutes at 20 revolutions per minute (RPM) under nitrogen flow of 0.4 m³/hr.
(iii) Adding component (D) and continue stirring for 15 minutes.
(iv) Heating the mixture to 120 °C under vacuum (approximately 0.1 MPa) for 1 hr.
(v) Then, cooling the mixture to 22 °C and adding component (F) and mixing for 15 minutes at 750 RPM under nitrogen purge.
(vi) For CE4 and CE9, a condensation catalyst was added.
(vii) For IE4, IE5, IE7 and CE10, a reactive polymer was further added.

### <Part B Compositions>

Each part B composition shown in Tables 1-5 was produced by the following steps:
(i) Loading component (A), component (E) and pigment into another container of a 10-Liter Turello mixer and mix for 5 minutes at 20 RPM under nitrogen flow of 0.4 m3/hr.
(ii) Adding component (D) and continue stirring for 15 minutes.
(iii) Heating the mixture to 120 °C under vacuum (approximately 0.1 MPas) for 1 hr.
(iv) Cooling the mixture to 22 °C and adding component (G), component (B) and component (C) and mixing for 15 minutes at 750 RPM under nitrogen purge.
(v) For IE4, IE5 and CE10, a reactive polymer was further added.

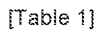

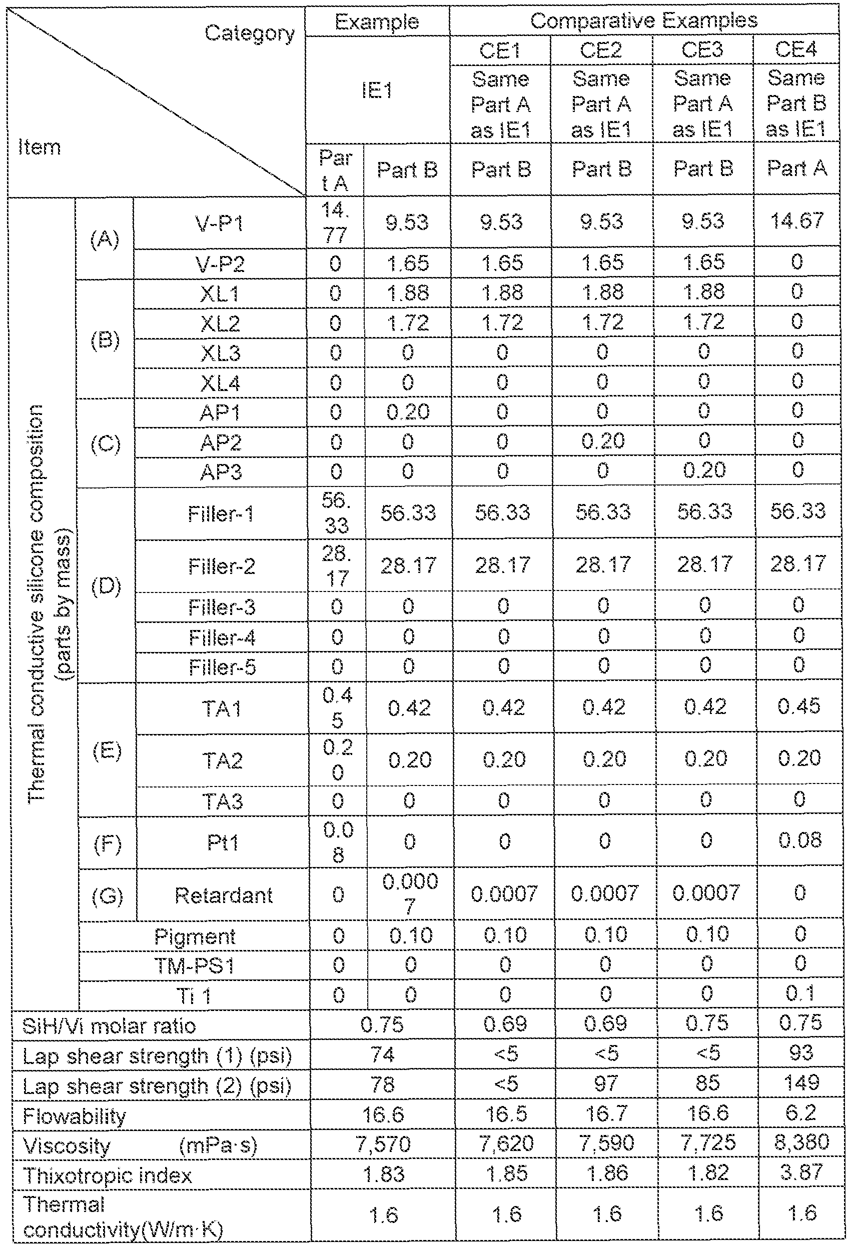

As shown in Table 1, the present composition of IE1 exhibited good flowability and low thixotropy, and good self-adhesion when it was cured at both low and high temperatures. The comparative compositions of CE1, CE2 and CE3 exhibited good flowability and low thixotropy, however they exhibited poor self-adhesion when they were cured at low temperature. While, the comparative composition of CE4 exhibited good self-adhesion when it was cured at low temperatures, however, it exhibited low flowability and high thixotropy for use as an encapsulant or potting material. The results in Table 1 indicates that component (C) provides good self-adhesion even when it was cured at a low temperature, without impairing flowability of the composition. The results in Table 1 also indicates that the condensation catalyst provides good self-adhesion even when it was cured at a low temperature, however, the addition of the condensation catalyst caused increase in viscosity and decrease in flowability.

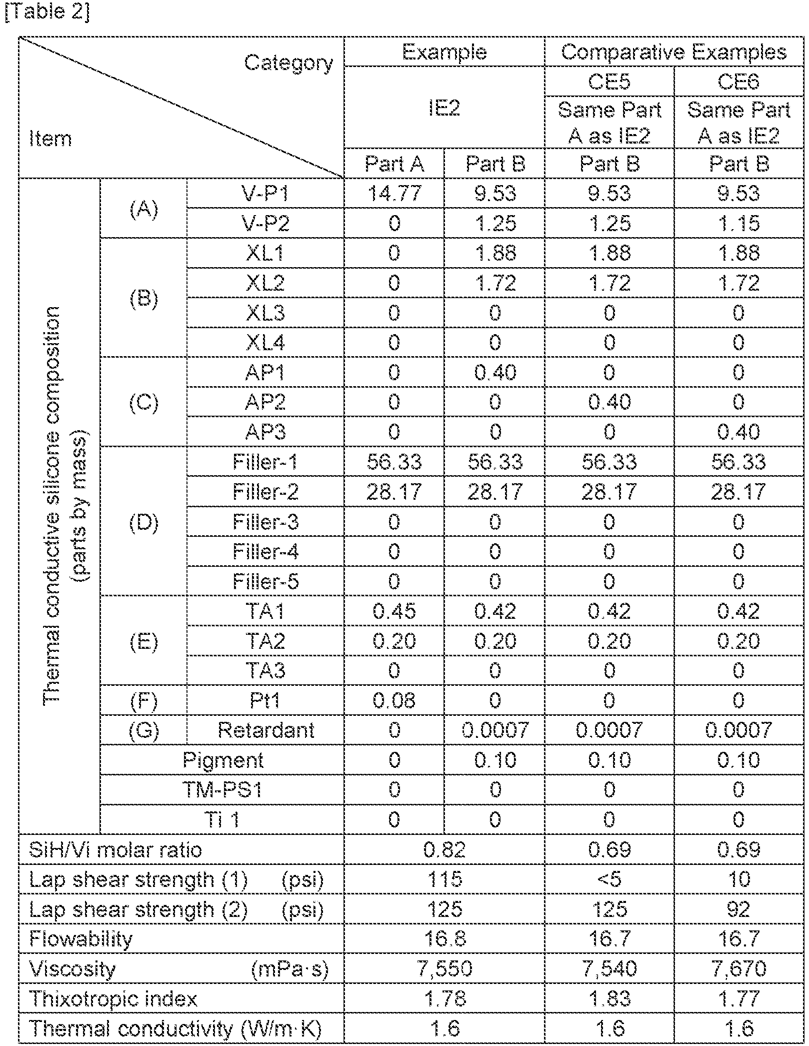

As shown in Table 2, the present composition of IE2 was further loaded component (B) into the composition of IE1, so that it exhibited good flowability and low thixotropy, and good self-adhesion when it was cured at both low and high temperatures. While, the comparative compositions of CE4 and CE5 exhibited good flowability and low thixotropy, however they exhibited poor self-adhesion when they were cured at low temperature. The results in Table 2 also indicates that component (C) provided good self-adhesion even when it was cured at a low temperature, without impairing flowability of the composition.

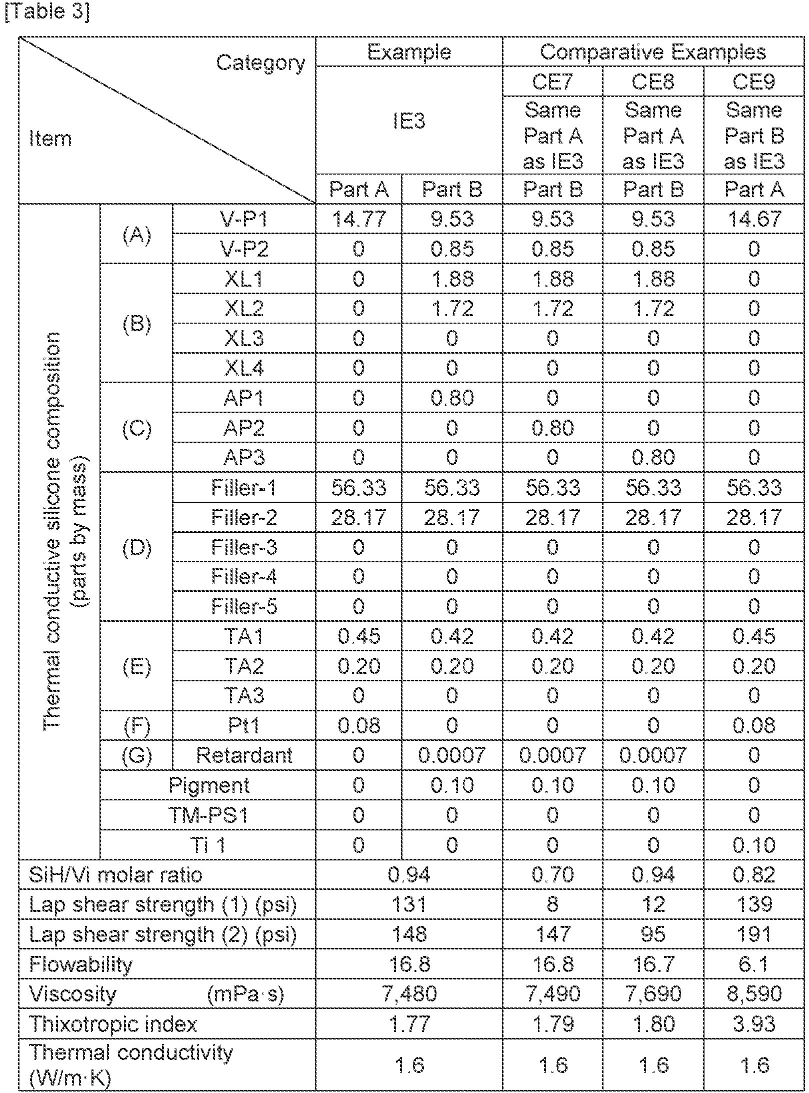

As shown in Table 3, the present composition of IE3 was further loaded component (B) into the composition of IE1, so that it exhibited good flowability and low thixotropy, and good self-adhesion when it was cured at both low and high temperatures. The comparative compositions of CE7 and CE8 exhibited good flowability and low thixotropy, however they exhibited poor self-adhesion when they were cured at low temperature. While, the comparative composition of CE9 exhibited good self-adhesion when it was cured at low temperatures, however, it exhibited low flowability and high thixotropy for use as an encapsulant or potting material. The results in Table 3 also indicates that component (C) provides good self-adhesion even when it was cured at a low temperature, without impairing flowability of the composition. The results in Table 3 also indicates that the condensation catalyst provides good self-adhesion even when it was cured at a low temperature, however, the addition of the condensation catalyst caused increase in viscosity and decrease in flowability.

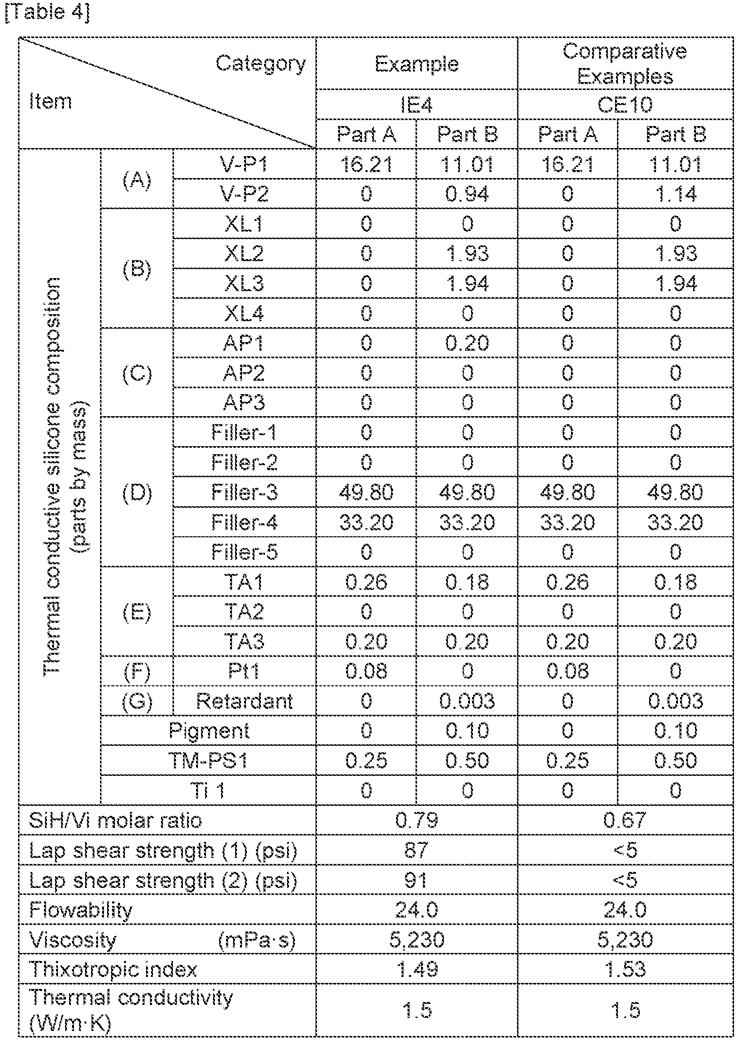

As shown in Table 4, though other thermal conductive fillers were loaded into the present composition of IE4, it exhibited good flowability and low thixotropy, and good self-adhesion when it was cured at both low and high temperatures. While, the comparative composition of CE10 exhibited good flowability and low thixotropy, however they exhibited poor self-adhesion when they were cured at both low and high temperatures. The results in Table 4 also indicates that component (C) provides good self-adhesion even when other thermal conductive fillers were loaded, without impairing flowability of the composition.

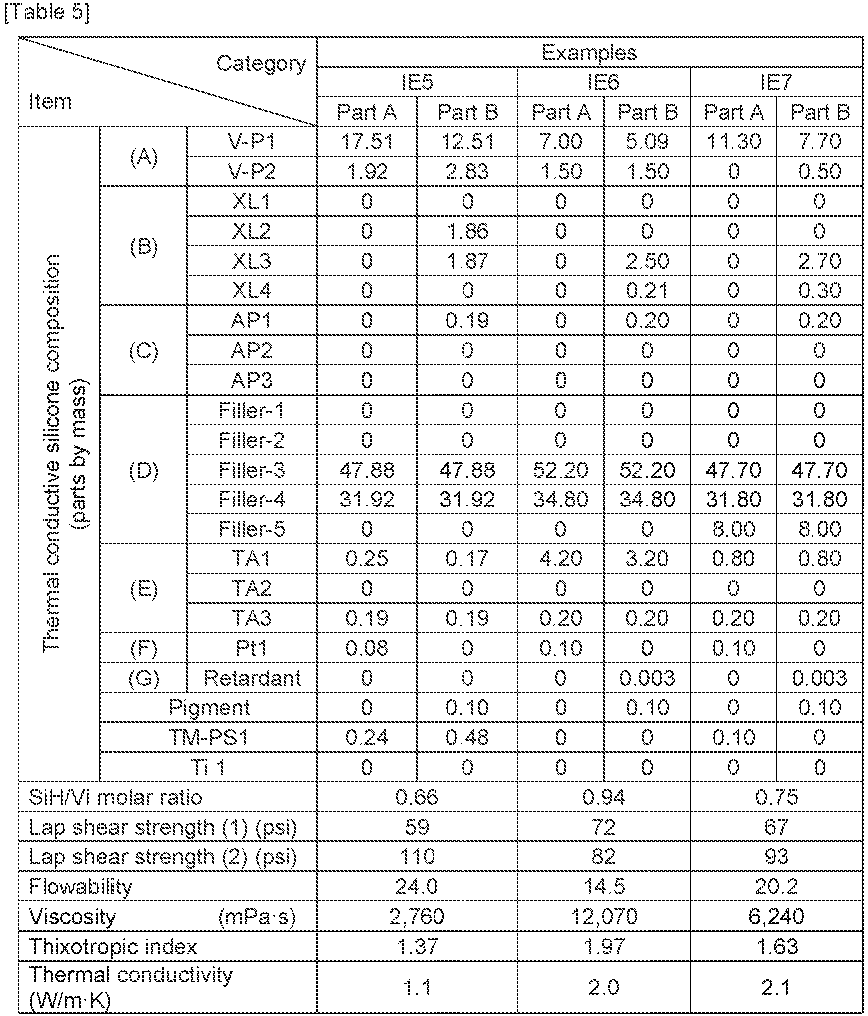

As shown in Table 5, though the contents of the thermal conductive fillers were changed in the present compositions of IE5, IE6 and IE7, they exhibited good flowability and low thixotropy, and good self-adhesion when they were cured at both low and high temperatures. The results in Table 5 also indicates that component (C) provided good self-adhesion even when the contents of the thermal conductive fillers were changed, without impairing flowability of the composition.

### Industrial Applicability

The thermal conductive silicone composition of the present invention exhibits good self-adhesive properties to various substrates without impairing its flowability. Therefore, the thermal conductive silicone composition is useful for encapsulants or potting materials in electric/electronic devices.

## Claims

1. A thermal conductive silicone composition comprising:
(A) an organopolysiloxane having at least two silicon atom-bonded alkenyl groups per molecule and having a viscosity at 25 °C of from 10 to 10,000 mPa·s measured using a type B viscometer according to ASTM D 1084;
(B) an organopolysiloxane having at least two silicon atom-bonded hydrogen atoms per molecule, in an amount to provide 0.5 to 5 moles of silicon atom-bonded hydrogen atoms per 1 mole of alkenyl groups in component (A);
(C) an adhesion promoter represented by the following general formula:
HR¹₂Si(OSiR¹₂)ₘ-X-SiR¹ₐ(OR²) ₍₃₋ₐ₎
wherein each R¹ is independently an alkyl group having 1 to 6 carbon atoms, each R² is independently an alkyl group having 1 to 3 carbon atoms, X is an alkylene group having 2 to 6 carbon atoms, "a" is 0 or 1, and "m" is an integer of from 1 to 10, in an amount of from 0.05 to 2 mass% of the composition;
(D) at least one thermal conductive filler, in an amount of from 70 to 95 mass% of the composition;
(E) at least one filler treating agent, in an amount of from 0.1 to 2 mass% of the composition; and
(F) a catalytic amount of a hydrosilylation reaction catalyst,
with the proviso that the composition does not contain a condensation catalyst.

2. The thermal conductive silicone composition according to claim 1, wherein component (C) is an adhesion promoter represented by the following formula:
H(CH₃)₂SiOSi(CH₃)₂-CH₂CH₂-Si(OCH₃)₃.

3. The thermal conductive silicone composition according to claim 1, wherein component (D) is a thermal conductive filler having an average particle size of from 0.1 µm to 50 µm.

4. The thermal conductive silicone composition according to claim 1, component (E) is a filler treating agent selected from (E1) an organosiloxane represented by the following general formula (1):
R³₃SiO(SiR³₂O)ₙSiR³_{b}(OR⁴) _{(4-b)}
wherein each R³ is independently an alkyl group with 1 to 3 carbon atoms or an alkenyl groups with 2 to 6 carbon atoms, each R⁴ is independently an alkyl group with 1 to 3 carbon atoms, "b" is 0 or 1, and "n" is an integer of 5 to 150;
(E2) an alkoxysilane represented by the following general formula (2):
R⁵_{c}R⁶_{d}Si(OR⁷) _{(4-c-d)}
wherein each R⁵ is independently an alkyl group with 1 to 3 carbon atoms, each R⁶ is independently an alkyl group with 6 to 12 carbon atoms, each R⁷ is independently an alkyl group with 1 to 3 carbon atoms; and "c" is 0 or 1, "d" is 0 or 1, provided that "c+d" is 1 or 2; and a mixture of components (E1) and (E2).

5. The thermal conductive silicone composition according to claim 1, further comprising: (G) retardant, in an amount of 0.001 to 5 parts by mass per 100 parts by mass of component (A).

6. The thermal conductive silicone composition according to claim 1 being a two-part composition, wherein component (A), component (B), and component (F) do not exist within the same part; and component (A), component (C), and component (F) do not exist within the same part.

7. The thermal conductive silicone composition according to claim 5 being a two-part composition, wherein component (A), component (B), and component (F) do not exist within the same part; component (A), component (C), and component (F) do not exist within the same part; and component (G) exists in a different part from that of component (F).

## Patentansprüche

1. Wärmeleitfähige Silikonzusammensetzung, umfassend:
(A) ein Organopolysiloxan, aufweisend mindestens zwei an Siliciumatome gebundene Alkenylgruppen pro Molekül und eine Viskosität bei 25 °C von 10 bis 10.000 mPa·s, gemessen mit einem Viskosimeter vom Typ B gemäß ASTM D 1084;
(B) ein Organopolysiloxan, aufweisend mindestens zwei an Siliciumatome gebundene Wasserstoffatome pro Molekül, in einer Menge, die 0,5 bis 5 Mol an Siliciumatome gebundene Wasserstoffatome pro 1 Mol Alkenylgruppen in Komponente (A) bereitstellt;
(C) einen Haftvermittler, der durch die folgende allgemeine Formel dargestellt ist:
HR¹₂Si(OSiR¹₂)ₘ-X-SiR¹ₐ(OR²) ₍₃₋ₐ₎,
wobei jedes R¹ unabhängig voneinander eine Alkylgruppe mit 1 bis 6 Kohlenstoffatomen ist, jedes R² unabhängig voneinander eine Alkylgruppe mit 1 bis 3 Kohlenstoffatomen ist, X eine Alkylengruppe mit 2 bis 6 Kohlenstoffatomen ist, "a" 0 oder 1 ist und "m" eine Ganzzahl von 1 bis 10 ist, in einer Menge von 0,05 bis 2 Masse-% der Zusammensetzung;
(D) mindestens einen wärmeleitfähigen Füllstoff in einer Menge von 70 bis 95 Masse-% der Zusammensetzung;
(E) mindestens ein Füllstoffbehandlungsmittel in einer Menge von 0,1 bis 2 Masse-% der Zusammensetzung; und
(F) eine katalytische Menge eines Hydrosilylierungsreaktionskatalysators,
mit der Maßgabe, dass die Zusammensetzung keinen Kondensationskatalysator enthält.

2. Wärmeleitfähige Silikonzusammensetzung nach Anspruch 1, wobei Komponente (C) ein Haftvermittler ist, der durch die folgende Formel dargestellt ist:
H(CH₃)₂SiOSi(CH₃)₂-CH₂CH₂-Si(OCH₃)₃.

3. Wärmeleitfähige Silikonzusammensetzung nach Anspruch 1, wobei Komponente (D) ein wärmeleitfähiger Füllstoff mit einer durchschnittlichen Teilchengröße von 0,1 µm bis 50 µm ist.

4. Wärmeleitfähige Silikonzusammensetzung nach Anspruch 1, wobei Komponente (E) ein Füllstoffbehandlungsmittel ist, das ausgewählt ist aus (E1) einem Organosilikonoxan, das durch die folgende allgemeine Formel (1) dargestellt ist:
R³₃SiO(SiR³₂O)ₙSiR³_{b}(OR⁴) _{(4-b)},
wobei jedes R³ unabhängig voneinander eine Alkylgruppe mit 1 bis 3 Kohlenstoffatomen oder eine Alkenylgruppe mit 2 bis 6 Kohlenstoffatomen ist, jedes R⁴ unabhängig voneinander eine Alkylgruppe mit 1 bis 3 Kohlenstoffatomen ist, "b" 0 oder 1 ist und "n" eine Ganzzahl von 5 bis 150 ist;
(E2) einem Alkoxysilan, das durch die folgende allgemeine Formel (2) dargestellt ist:
R⁵_{c}R⁶_{d}Si(OR⁷) _{(4-c-d)},
wobei jedes R⁵ unabhängig voneinander eine Alkylgruppe mit 1 bis 3 Kohlenstoffatomen ist, jedes R⁶ unabhängig voneinander eine Alkylgruppe mit 6 bis 12 Kohlenstoffatomen ist, jedes R⁷ unabhängig voneinander eine Alkylgruppe mit 1 bis 3 Kohlenstoffatomen ist; und "c" 0 oder 1 ist, "d" 0 oder 1 ist, mit der Maßgabe, dass "c+d" 1 oder 2 ist; und einer Mischung aus Komponenten (E1) und (E2).

5. Wärmeleitfähige Silikonzusammensetzung nach Anspruch 1, ferner umfassend: (G) ein Flammschutzmittel in einer Menge von 0,001 bis 5 Massenteilen, bezogen auf 100 Massenteile der Komponente (A).

6. Wärmeleitfähige Silikonzusammensetzung nach Anspruch 1, die eine zweiteilige Zusammensetzung ist, wobei Komponente (A), Komponente (B) und Komponente (F) nicht innerhalb desselben Teils vorliegen; und Komponente (A), Komponente (C) und Komponente (F) nicht innerhalb desselben Teils vorliegen.

7. Wärmeleitfähige Silikonzusammensetzung nach Anspruch 5, die eine zweiteilige Zusammensetzung ist, wobei Komponente (A), Komponente (B) und Komponente (F) nicht innerhalb desselben Teils vorliegen; Komponente (A), Komponente (C) und Komponente (F) nicht innerhalb desselben Teils vorliegen; und Komponente (G) in einem anderen Teil als dem der Komponente (F) vorliegt.

## Revendications

1. Composition de silicone thermoconductrice comprenant :
(A) un organopolysiloxane ayant au moins deux groupes alcényle liés à des atomes de silicium par molécule et ayant une viscosité à 25 °C allant de 10 à 10 000 mPa·s, mesurée à l'aide d'un viscosimètre de type B conformément à la norme ASTM D 1084 ;
(B) un organopolysiloxane ayant au moins deux atomes d'hydrogène liés à des atomes de silicium par molécule, en une quantité permettant d'obtenir 0,5 à 5 moles d'atomes d'hydrogène liés à des atomes de silicium pour 1 mole de groupes alcényle dans le composant (A) ;
(C) un promoteur d'adhésion représenté par la formule générale suivante :
HR¹₂Si(OSiR¹₂)ₘ-X-SiR¹ₐ(OR²) ₍₃₋ₐ₎,
dans laquelle chaque R¹ est indépendamment un groupe alkyle ayant 1 à 6 atomes de carbone, chaque R² est indépendamment un groupe alkyle ayant 1 à 3 atomes de carbone, X est un groupe alkylène ayant 2 à 6 atomes de carbone, « a » vaut 0 ou 1, et « m » est un nombre entier allant de 1 à 10, en une quantité allant de 0,05 à 2 % en masse de la composition ;
(D) au moins une charge thermoconductrice, en une quantité allant de 70 à 95 % en masse de la composition ;
(E) au moins un agent de traitement de charge, en une quantité allant de 0,1 à 2 % en masse de la composition ; et
(F) une quantité catalytique d'un catalyseur de réaction d'hydrosilylation,
à condition que la composition ne contienne pas de catalyseur de condensation.

2. Composition de silicone thermoconductrice selon la revendication 1, dans laquelle le composant (C) est un promoteur d'adhésion représenté par la formule suivante :
H(CH₃)₂SiOSi(CH₃)₂-CH₂CH₂-Si(OCH₃)₃.

3. Composition de silicone thermoconductrice selon la revendication 1, dans laquelle le composant (D) est une charge thermoconductrice ayant une taille moyenne de particules allant de 0,1 µm à 50 µm.

4. Composition de silicone thermoconductrice selon la revendication 1, le composant (E) est un agent de traitement de charge choisi parmi (E1) un organosiloxane représenté par la formule générale (1) suivante :
R³₃SiO(SiR³₂O)ₙSiR³_{b}(OR⁴) _{(4-b)}
dans laquelle chaque R³ est indépendamment un groupe alkyle avec 1 à 3 atomes de carbone ou un groupe alcényle avec 2 à 6 atomes de carbone, chaque R⁴ est indépendamment un groupe alkyle avec 1 à 3 atomes de carbone, « b » vaut 0 ou 1, et « n » est un nombre entier de 5 à 150 ;
(E2) un alcoxysilane représenté par la formule générale (2) suivante :
R⁵_{c}R⁶_{d}Si(OR⁷) _{(4-c-d)}
dans laquelle chaque R⁵ est indépendamment un groupe alkyle avec 1 à 3 atomes de carbone, chaque R⁶ est indépendamment un groupe alkyle avec 6 à 12 atomes de carbone, chaque R⁷ est indépendamment un groupe alkyle avec 1 à 3 atomes de carbone ; et « c » vaut 0 ou 1, « d » vaut 0 ou 1, à condition que « c + d » vaille 1 ou 2 ; et un mélange des composants (E1) et (E2).

5. Composition de silicone thermoconductrice selon la revendication 1, comprenant en outre : (G) un retardateur, en une quantité de 0,001 à 5 parties en masse pour 100 parties en masse du composant (A).

6. Composition de silicone thermoconductrice selon la revendication 1, qui est une composition en deux parties, dans laquelle le composant (A), le composant (B), et le composant (F) n'existent pas dans la même partie ; et le composant (A), le composant (C), et le composant (F) n'existent pas dans la même partie.

7. Composition de silicone thermoconductrice selon la revendication 5, qui est une composition en deux parties, dans laquelle le composant (A), le composant (B), et le composant (F) n'existent pas dans la même partie ; le composant (A), le composant (C), le composant (F) n'existent pas dans la même partie ; et le composant (G) existe dans une partie différente de celle du composant (F).
